# EUROPEAN PATENT SPECIFICATION

(11) **EP 4 609 090 B1**
(45) Date of publication and mention of the grant of the patent: **02.12.2026**
(21) Application number: 22809078.3
(22) Date of filing: 25.10.2022
(51) Int. Cl.: F16H 57/031

(54) **COVER FOR A WORM WHEEL GEAR BOX, WORM WHEEL GEAR BOX FOR A STEERING SYSTEM AND ELECTRIC POWER STEERING SYSTEM FOR A VEHICLE**
ABDECKUNG FÜR EIN SCHNECKENRADGETRIEBE, SCHNECKENRADGETRIEBE FÜR EIN LENKSYSTEM UND ELEKTRISCHES SERVOLENKSYSTEM FÜR EIN FAHRZEUG
COUVERCLE POUR BOÎTE D'ENGRENAGE À ROUE HÉLICOÏDALE, BOÎTE D'ENGRENAGE À ROUE HÉLICOÏDALE POUR UN SYSTÈME DE DIRECTION ET SYSTÈME DE DIRECTION ASSISTÉE ÉLECTRIQUE POUR UN VÉHICULE

(43) Date of publication of application: 03.09.2025
(73) Proprietor: NSK Europe Ltd., Maidenhead Berkshire SL6 1AF (GB)
(72) Inventor: WEINDORF, Tobias, 71735 Eberdingen (DE); SCHIEK, Bernd, 73650 Winterbach (DE)
(74) Representative: Müller-Boré & Partner Patentanwälte PartG mbB
(86) International application number: PCT/EP2022/079692
(87) International publication number: WO 2024/088514

(56) References cited:
- WO-A1-2022/009523
- CN-A- 105 966 452
- CN-A- 110 304 129
- CN-A- 111 731 204
- DE-A1- 102012 110 363
- FR-A1- 3 116 039
- GB-A- 2 495 162
- US-A1- 2018 273 083
- US-A1- 2020 369 313
- US-A1- 2022 332 361

## Description

The present invention relates to a cover for a worm wheel gear box, a worm wheel gear box for a steering system including said cover, and an electric power steering system for a vehicle including said worm wheel gear box and said cover.

In the prior art, electrically as well as hydraulicly supported steering systems are known for supporting a driver of a vehicle during steering, such that the driver of the vehicle merely needs to apply a comparatively reduced force in order to steer the vehicle in the desired direction. In electrically supported steering systems, an electric motor supplies a turning force to a rack bar via a steer-supporting gear. Said steer-supporting gear is encased by a closable gear box, which is particularly subject to stress due toa temperature difference of the closable gear box between a cold state and a heated state when commonly driving the vehicle. Said temperature difference and the resulting pressure may particularly entail the risk of leakage of a lubricant contained in the closable gear box, as well as the risk of contaminating particles and fluids which ingress from outside of the closable gear box.

US 2022/332361 A1 describes a casing of a power steering system, including at least one fastening seat of a cover, the fastening seat delimiting an orifice, the cover being intended to seal the orifice, the fastening seat including a support wall for the cover, wherein the fastening seat also includes at least one elongation portion disposed outside the support wall, the elongation portion having at least one deformation area configured to be folded over the cover.

FR 3 116 039 A1 describes a housing of an assistance device comprising an orifice including an edge projecting from the housing and defining a hollow cylinder, a cover intended to be placed on the edge so as to obstruct the hole, the cover comprising a cylindrical lateral portion, a clamping means, when the cover is placed on the projecting edge, the lateral portion surrounds the edge, allowing the cover to be fitted onto the edge, the clamping means exerting a mechanical clamping action in a uniform radial direction on the lateral portion so as to allow the cover to be held in position on the edge.

DE 10 2012 110363 A1 describes a housing for a steering gear and a plastic housing.

CN 105 966 452 A describes a housing structure which includes: a first housing having a fitting inner tubular portion that has an inner tubular end surface and a first bolt fastening portion that has a first bolt aligning surface formed at a position away from the inner tubular end surface in the radial direction, the first housing supporting a first end of an assist shaft via a first bearing; and a second housing having a fitting outer tubular portion having an outer tubular end surface and a second bolt fastening portion that has a second bolt aligning surface that mates with the first bolt aligning surface, the second housing supporting a second end of the assist shaft via a second bearing. A first gap is provided between the inner tubular end surface and an inner tubular opposite surface, and a second gap is provided between the outer tubular end surface and an outer tubular opposite surface.

US 2020/369313 A1 describes a method for fixing a cover on an orifice of a power steering system including a step of approaching the cover to the orifice, characterized in that it includes a step of inserting at least one extension of the cover in at least one recess positioned next to the orifice and a step of deforming the at least one elongation of the cover.

CN 111 731 204 A describes an electric power steering system for a light commercial vehicle. The electric power steering system comprises a steering engine shell and a sensor wire harness, the steering engine shell is provided with a first wire harness via a hole. A wire harness sealing sleeve is arranged in the first wire harness via the hole; a wire harness pressing plate for fixing the wire harness sealing sleeve in the first wire harness via the hole is arranged on the steering engine shell; the wire harness sealing sleeve is provided with a second wire harness via the hole allowing a sensor wire harness to penetrate through, a radial sealing ring making contact with the outer circular face of the sensor wire harness is arranged in the second wire harness via the hole, the sensor wire harness penetrates through the radial sealing ring, and the radial sealing ring is fixedly connected with the inner circular face of the wire harness sealing sleeve. According to the electric power steering system for the light commercial vehicle, the wire harness sealing sleeve is arranged in the wire harness via the hole, and the radial sealing ring is arranged in the wire harness sealing sleeve, so that a good sealing effect can be achieved, and the sealing effect of the wire harness via the hole in the steering engine shell is improved.

US 2018/273083 A1 describes a plug including a hub which extends along a central axis and is defined radially by a side wall wherein an annular groove is formed, which receives a sealing member, the groove provided between a bottom wall and first annular edge wall, and a second annular edge wall, which axially defines the groove, the hub being formed by the combination of a first hub section on which the first edge wall is formed, and a second hub section on which the second edge wall is formed, the first hub section and the second hub section being assembled so that they meet at a gasket face which is secant to the central axis and the bottom wall of the groove, so the line of the intersection of the gasket face with the bottom wall is contained axially between the first and second edge wall over the entire perimeter of the groove.

GB 2 495 162 A describes a motor-driven power steering apparatus having a preload means which energizes, via a spring and bumper stop, a bearing of a worm gear in a predetermined preload direction, the preload means has a bearing case which fits into a guide hole in a guide case. The bearing case has a spring accommodation hole which is arranged so as to cross a bearing accommodation hole provided in the bearing case. Guided portions are provided on an outer periphery of the bearing case so that the bearing case may be transitioned fitted in the guide hole which has flat surfaces that contact the guide portions. The preload means is arranged in an attaching portion of a gear housing. Bearing case may be made of plastics, the guide case may be made of metal and the bumper stop may be rubber.

CN 110 304 129 A describes vehicle steering systems and discloses a steering gear and a vehicle. According to the provided steering gear, firstly, through cooperation among a left motor, a left input shaft and a left rack, a left wheel is controlled for steering, moreover, through cooperation among a right motor, a right input shaft and a right rack, a right wheel is controlled for steering, so that independent control of the left wheel and the right wheel is realized, then steering of the vehicle is more flexible and smooth; secondly, when one set of mutually-cooperated control mechanism and rack mechanism are in failure, the other set of mutually-cooperated control mechanism and rack mechanism still can retain the steering function, so that the safety of the vehicle is improved; and finally, the left rack and the right rack are arranged in a connecting sleeve in a penetrating mode, so that mechanical connection between a left side mechanism and a right side mechanism and mechanical connection between the left wheel and the right wheel are realized, a mechanical steering mechanism is established, and the safety of the vehicle is further improved. According to the provided vehicle, by applying the above steering gear, steering is more flexible and smooth, and the safety is higher.

**In** view of the above, it is an object of the present invention to provide an easily manufacturable and mountable cover for a worm wheel gear box which ensures an increased service life of the worm wheel gear box to be closed via said cover, and which particularly ensures an improved sealing of the worm wheel gear box.

Furthermore, it is an object of the present invention to provide a worm wheel gear box, as well as an electrical power steering system which respectively ensure easy manufacturing and mounting and an increased service life of a steering support for a driver, and which particularly ensure an improved sealing of the worm wheel gear box. The problems are solved by the subject-matter of the independent claims. Preferred embodiments are defined by the dependent claims. The claimed invention is defined by a cover according to appended claim 1, by a worm wheel gear box according to appended claim 11, and by an electric power steering system according to appended claim 12.

A cover for a worm wheel gear box is provided, according to claim 1.

Owing to the reinforcement structure of the cover body, the cover allows to securely close and particularly seal a worm wheel gear box, particularly a pressurized or stressed worm wheel gear box, wherein a lubricant can be stored with reduced risk of leakage of said lubricant, and wherein the worm wheel gear box has a reduced risk of contamination ingress. **In** turn, the efficiency of an electric power steering system can be improved, supporting convenient steering of a vehicle for a driver over an increased service life.

Furthermore, owing to the combination of the reinforcement structure with the first and second diametrically opposed attachment means, the cover is easily mountable and it is possible to precisely define load paths from the first attachment means to the second attachment means via the intermediary disposed reinforcement structure, on the basis of which the cover body can be structurally optimized between stiffness and weight, and on the basis of which load limits up to which the cover needs to sustain can be precisely defined. Thus, the reinforcement structure of the cover particularly provides for cost efficiently sealing the worm wheel gear box with an easily manufacturable cover.

Furthermore, owing to the precisely definable load path between the first and second attachment means, it is possible to precisely guide a load through the reinforcement structure with a load path which marginally interferes the sealing portion or which does not interfere the sealing portion, thus further enhancing the reliable sealing of the worm wheel gear box via the cover over an increased service life.

Still further, the reinforcement structure which provides for a stiff and precisely definable load path between the first and second attachment means provides for an improved noise damping, which in turn particularly increases the vehicle comfort as well as the service life of the worm wheel gear box.

Thus, the cover according to the present invention particularly allows for increasing the service life of a worm wheel gear box while securing efficient manufacturing and mounting of the cover.

In particular embodiments, the cover body is configured to be releasably attached to the worm wheel gear box. For example, the first and second attachment means configure a releasable attachment of the cover to corresponding attachment means of the worm wheel gear box.

The releasably attachable cover advantageously allows to ensure maintainability of the worm wheel gear box.

In particular embodiments, the first attachment means and/or the second attachment means protrude from the cover body, in particular substantially in a plane in which the disc or dome shaped cover body has his major extension. In other words, the first and/or the second attachment means may protrude substantially radially from the disc or dome shaped cover body. In exemplary embodiments, the first and/or second attachment means are arranged at radial outer edge portions or substantially the radial outermost portions of the cover body.

The first attachment means and/or the second attachment means protruding from the cover body particularly allows for continuously forming the reinforcement structure to the cover body, particularly in between the first and second attachment means, which in turn allows for precisely defining the load path between the first and second attachment means.

In particular embodiments, the cover body exclusively includes the first attachment means and the second attachments means as attachment means for attaching or mounting the cover to worm wheel gear box, particularly for attaching or mounting the cover to the opening of the worm wheel gear box so as to tightly close the opening of the worm wheel gear box.

In further particular embodiments, the first and the second attachment means do not include an adhesive for attaching the cover to worm wheel gear box, particularly for attaching the cover to the opening of the worm wheel gear box. In other words, the cover may be attached or mounted to the worm wheel gear box in an adhesive free manner.

Owing to the further defined first and second attachment means, the cover particularly allows for further precisely defining the load paths of the cover, which the cover is subject to when the worm wheel gear box is pressurized, for example due to a heated lubricant.

In particular embodiments of the cover, the cover may have a flange portion which extends substantially circumferentially around the substantially disc or dome shaped cover body, particularly at a top side of the cover, i.e. at the outer surface.

The flange portion advantageously enhances the handling of the cover, for example for attaching the cover to the worm wheel gear box. Furthermore, the flange portion advantageously allows for securing a sealing member to the sealing portion of the cover, in order to sealingly engage the opening of the worm wheel gear box. The flange portion may for example be formed adjacent to the sealing portion and owing to its substantially circumferential extension prevent a sealing member from being pushed from the cover and its sealing portion during attachment of the cover to the worm wheel gear box.

In exemplary embodiments, the disc or dome shaped cover body may have a substantially circular shape in plan view. However, the disc or dome shaped cover body is not limited thereto and the shape of the disc or dome shaped cover body may deviate from a strict circular shape, for example in that the disc or dome shaped cover body may have a substantially elliptical, rectangular, or other polygonal shape in a plan view, i.e. when viewing the outer surface from the top.

As compared to a cover body being a disc shaped cover body including a substantially plane outer surface, the cover body being a dome shaped cover body particularly includes a convex top, having an outwardly curved convex shape, i.e. which particularly includes an increased height toward a middle of the cover body.

In further exemplary embodiments, the cover may include a substantially tubular shaped portion extending from the outer surface toward the inner surface. The substantially tubular shaped portion may particularly include the sealing portion. The sealing portion may for example include one or more grooves or recesses which extend around the tubular portion, for example in substantially circumferential direction. The sealing portion accordingly may include one or more sealing members, such as one or more O-rings, at the respective groove or recess, in order to increase the tightness when attaching the cover to the worm wheel gear box. In accordance with the disc or dome shaped cover body, the substantially tubular shaped portion may particularly have a substantially circular cross section, but is not limited to this, and may have a substantially elliptical, rectangular, or other polygonal shape cross section.

The substantially tubular portion may be configured to at least partially extend into the opening of the worm wheel gear box, when the cover is in an attached or mounted state with respect to the worm wheel gear box, in order to sealingly close or tightly close the worm wheel gear box.

The cover may particularly include a disc or dome shaped top at a distal end of the substantially tubular portion, i.e. at a top end of the substantially tubular portion, such that the disc or dome shaped top may at least partially form the outer surface from a top view, i.e. from a plane view toward the outer surface.

In particular embodiments, the first attachment means and/or the second attachment means include an attachment hole, wherein the attachment hole is configured to removably receive corresponding attachment means of the worm wheel gear box, for example a screw, a pin, and/or a clip. In other particular embodiments, the first attachment means and/or the second attachment means may include an attachment protrusion, for example a screw, a pin, and/or a clip, for releasably engaging corresponding attachment means of the worm wheel gear box. In particular embodiments, the first attachment means and/or the second attachment means may be configured to form a releasable form-fit engagement and/or a releasable friction-fit engagement with the corresponding attachment means of the worm wheel gear box.

Herein, in case a direction is given with the indication substantially or about, the respective direction may be understood to be in a range of 0° to 10°, preferably in a range of 0° to 5° deviating from the respective direction.

Herein, in case a measure or an amount is given with the indication substantially or about, the respective measure or amount may be understood to be in a range of 0% to 10%, preferably in a range of 0% to 5% deviating from the respective measure or amount.

A direction from the first attachment means to the substantially diametrically opposed second attachment means is exemplarily denoted as a length direction, herein.

A direction substantially perpendicular to the length direction and substantially extending in a plane with the major extension of the cover is exemplarily denoted as width direction.

A direction substantially pointing from the inner surface of the cover body to the opposite outer surface is exemplarily denoted as height direction. The height direction may particularly be substantially perpendicular to the length direction and/or to the width direction. Accordingly, in case it is referred to a lower side or bottom side of the cover, this relates to the inner surface, and in case it is referred to a top side or an upper side of the cover, this relates to the outer surface.

In case reference is made to a radial direction or to the term radial, such direction is contemplated as lying in a plane spanned by the length direction and the width direction, which extends outward from a middle of the cover or the cover body. Said middle is contemplated as part of an axis of a substantially tubular portion of the cover, which may particularly relate to a rotational symmetry axis for the substantial tubular portion in case of a cylindrical tubular portion.

The reinforcement structure of the cover body includes an outer reinforcement structure on the outer surface and an inner reinforcement structure on the inner surface.

In other words, the reinforcement structure of the cover body particularly includes an upper reinforcement structure and a lower reinforcement structure. In still other words, the cover includes an outer reinforcement structure which particularly extends upon the outer surface, and includes an inner reinforcement structure which particularly extends on the lower side of the cover body, i.e. particularly opposite of the outer reinforcement structure.

Meanwhile one distinct reinforcement structure particularly allows for precisely defining the load paths in the cover, particularly between the first and the second attachment means, two distinct reinforcement structures allow for distinctly distributing the pressure load, while allowing to manufacture the cover with a comparatively small height.

Accordingly, the outer and inner reinforcement structure allow for efficiently ensuring an increased service life of the cover, while facilitating the manufacturing and mounting of the cover and particularly reducing the weight of the cover.

The reinforcement structure includes an outer reinforcement structure extending from the first attachment means to the second attachment means.

In further particular embodiments, the outer reinforcement structure may extend directly adjacent from the first attachment means directly adjacent to the second attachment means.

In other words, the outer reinforcement structure may particularly provide a direct load transmission between the first attachment means and the diametrically opposite second attachment means. Said direct load transmission may particularly relate to a geometrically shortest possible path between the first attachment means and the second attachment means.

Thus, a load between the first attachment means and the second attachment means may advantageously be guided through a predetermined and particularly reinforced portion of the cover body without affecting other portions of the cover body which particularly ensure a tight closure of the worm wheel gear box.

In particular embodiments of the cover, the first attachment means may be a first attachment hole and the second attachment means may be a second attachment hole,
wherein the outer reinforcement structure preferably continuously extends from a wall directly surrounding the first attachment hole to a wall directly surrounding the second attachment hole.

Meanwhile the first and second attachments means being an attachment hole advantageously facilitate manufacturing the cover, as well as releasably attaching the cover to the worm wheel gear box, the outer reinforcement structure continuously extending between the directly surrounding walls of said holes further enhances the load guidance between the first attachment means and the second attachment means.

The outer reinforcement structure is a rib extending from the first attachment means to the second attachment means.

In other words, the outer reinforcement structure is a rib extending outward or upward from the outer surface and between the first and second attachment means.

The rib advantageously further enhances precisely guiding of loads between the first and second attachment means. Furthermore, the rib advantageously increases the bending stiffness of the cover, such that the cover has a reduced risk of being bent, buckled or otherwise deformed or damaged when tightly closing the pressurized interior of the worm wheel gear box.

In exemplary embodiments, the rib may extend substantially linearly between the first and second attachment means, i.e. substantially in the length direction, in which the first and second attachment means are diametrically opposed.

In exemplary embodiments, when the first and second attachment means are formed as attachment holes, said attachment holes may form a substantially tubular or axial extension. The rib may particularly extend from the tubular surrounding of the attachment hole of the first attachment means to the tubular surrounding of the attachment hole of the second attachment means. The rib may particularly have the substantially same extension in the height direction, i.e. in a substantially axial direction of the respective attachment hole, than the respective attachment hole formed by its tubular surrounding. This advantageously ensures a smooth load guidance from the attachment means to the rib.

The rib may particularly have an increased height toward the middle of the cover body, and accordingly have a reduced height toward the respective first and second attachment means, which advantageously increases the bending stiffness of the cover.

In particular embodiments of the cover, the outer reinforcement structure may have a cross section which respectively increases toward the first attachment means and the second attachment means. In turn, the cross section of the outer reinforcement structure may particularly decrease from the respective first and second attachment hole toward the middle of the cover body.

The cross section of the outer reinforcement structure directly adjacent the respective attachment means may particularly substantially correspond to the cross section of the respective first or second attachment means. This advantageously ensures a smooth load guidance from the attachment means to the outer reinforcement structure. Furthermore, since the cross section of the outer reinforcement structure decreases towards the middle, continuously broad cross sections can be avoided, which could lead to unwanted shrinkage of the cover or shrinkage holes inside the cover, particularly when molding the cover, e.g. when injection molding the cover.

In particular embodiments of the cover, the reinforcement structure may include an inner reinforcement structure extending substantially across or over the inner surface.

The inner reinforcement structure particularly allows for further increasing the stiffness of the cover, particularly the bending stiffness of the cover. Furthermore, the inner reinforcement structure particularly allows for reinforcing the sealing portion, particularly from a radial inner portion on the inner surface, such that a tight closure of the worm wheel gear box via the cover can be ensured.

The sealing portion formed on the inner surface and configured to sealingly engage a circumference of the opening of the worm wheel gear box may particularly be formed as at least one substantially circumferential groove at an outer circumference of a substantially tubular portion of the cover body, which is configured to extend into the opening of the worm wheel gear box. One or more sealing members may be at least partially disposed inside the at least one substantially circumferential groove.

The inner reinforcement structure may be formed inward, particularly substantially radially inward, of the substantially tubular portion of the cover body, at which the sealing portion is formed. In particular embodiments, the inner reinforcement structure may be configured to extend across the radial inward portion of the substantially tubular portion, and particularly be directly connected to the substantially tubular portion. Furthermore, the inner reinforcement structure may be configured to extend along the lower side or bottom side of the disc or dome shaped cover body.

Accordingly, the inner reinforcement structure advantageously increases the stiffness of the cover, and further particularly reinforces the inner surface of the cover from radially inward, thus enhancing the tight closure of the worm wheel gear box via the cover for a comparatively long service life.

In particular embodiments of the cover, the inner reinforcement structure may include a honeycomb structure.

In alternative embodiments of the cover, the inner reinforcement structure may include other structures, particularly segmented or branched web-like structures having distinct wall portions extending across the inner surface of the cover body, wherein valley portions with reduced material thickness are formed in between neighbouring wall portions.

The inner reinforcement structure accordingly advantageously allows for increasing the stiffness of the cover and for reinforcing the sealing portion from radially inward, while due to the valley portions, an undue increase of weight of the cover can be prevented. Thus, the inner reinforcement structure including a honeycomb structure and/or other segmented or branched structures allows for efficiently increasing the stiffness of the cover, as well as for reinforcing the sealing portion, which in turn increases the service life of a tight closure of the worm wheel gear box via the cover.

In this regard, the applicant surprisingly found that a honeycomb structure as an inner reinforcement structure for the cover, wherein the honeycomb structure includes a plurality of substantially hexagonal shaped combs extending across the inner surface of the cover body, allows for efficiently increasing the stiffness and for reinforcing the sealing portion, while preventing an undue increase of weight of the cover, such that a service life of the tightly closed pressurized worm wheel gear box can be efficiently ensured.

In particular embodiments of the cover, the honeycomb structure may include comb wall portions and substantially hexagonal shaped valley portions in between the comb wall portions.

In exemplary embodiments, comb wall portions of the honeycomb structure may have a wall thickness in a region of about 0,8 mm to about 4,0 mm, preferably in a range of about 1,2 mm to about 3,6 mm, further preferably in a range of about 2,0 mm to about 3,0 mm. The given wall thickness ranges of the comb wall portions advantageously provide for an efficient stiffness to weight ratio, while being easily manufacturable.

In particular embodiments of the cover, the honeycomb structure may include a plurality of combs, particularly at least 7 fully formed combs around the center of the cover body and a plurality of partially formed combs which respectively extend between the fully formed combs and the sealing portion.

In other words, the honeycomb structure may include a plurality of combs including at least one fully formed comb and a plurality of partially formed combs adjacently surrounding the at least one fully formed comb. For example, the honeycomb structure may include at least 7 fully formed combs, at the inner surface of the cover body. The plurality of combs, particularly the at least 7 fully formed combs, may be substantially evenly shaped fully formed combs. For substantially hexagonal shaped combs, the plurality of fully formed combs provide at least one middle comb at the center or middle of the cover body, adjacently surrounded by 6 combs, which in turn may be surrounded by further combs, particularly surrounded by partially formed combs which respectively include comb wall portions which extend to an inner circumference of the sealing portion.

In particular embodiments of the cover, the honeycomb structure may include between 7 to 19 fully formed combs around the center of the cover body.

Including at least 7 fully formed combs, particularly 7 to 19 fully formed combs, allows for efficiently increasing the stiffness of the cover and reinforcing the sealing portion from radially inward, such that a tight closure or tight sealing of the worm wheel gear box via the cover can be ensured for an increased service life.

In particular embodiments of the cover, the cover may be a molded plastic part.

For example, the cover may be an injection molded part, particularly a one-piece injection molded part.

In exemplary embodiments, the cover may include or consist of plastic, particularly polyamide, polypropylene, and/or polyethylene, or may include or consist of fibre-reinforced plastic, such as glass fibre reinforced polyamide, glass fibre reinforced polypropylene, and/or glass fibre reinforced polyethylene. In further exemplary embodiments, the cover may include or consist of Aluminum and may particularly be die casted of Aluminum.

The cover being a molded part, particularly an injection molded plastic part, or a die casted Aluminum part, advantageously ensures efficient as well as repeated accurate manufacturing.

In further particular embodiments of the cover, the cover body may include one or more inlays and/or spacers at the first and/or second attachment means. The cover body may particularly include at least one inlay and/or spacer at each of the first and second attachment means. The inlay and/or spacer may particularly be shaped in correspondence with the first and/or second attachment means, and may particularly be a substantially tubular shaped insert which is configured to surround the first and second attachment hole, respectively.

In exemplary embodiments, the inlay and/or spacer may be included into the cover body via multi-component molding, particularly multi-component injection molding, which advantageously facilitates a stiff integration of the inlay and/or spacer into the cover body.

The inlay and/or spacer advantageously allow for locally increasing the stiffness, and thus advantageously allow for locally reinforcing the load paths within the cover body and particularly between the diametrically opposed attachment means. Furthermore, the inlay and/or spacer being integrated at the first and second attachment means, respectively, advantageously increase the resistance against surface pressure from fixation members for mounting the cover body to the worm wheel gear box, for example in case of a screw head contact at the attachment means.

In particular embodiments of the cover, the sealing portion may have an outer diameter in the range of about 60 mm to about 170 mm,
preferably in the range of about 100 mm to about 140 mm.

In other words, the cover may be configured to provide a sealing closure for the opening of the worm wheel gear box, the opening of the worm wheel gear box having a diameter in the range of about 60 mm to about 170 mm, preferably a diameter of at least about 100 mm, and further preferably a diameter in the range of about 100 mm to about 140 mm.

With the above mentioned diameter of the sealing portion and the accordingly formed cover, which may be formed with a flange extending in a range of about 2 mm to about 6 mm beyond the diameter of the sealing portion, the cover advantageously allows for tightly closing or tightly sealing an opening of a worm wheel gear box of a steering system of a vehicle for an increased service life.

According to another aspect, a worm wheel gear box for a steering system is provided, the worm wheel gear box comprising:
- a worm wheel connected to a pinion, wherein the pinion is configured to engage a rack bar for displacing steered wheels of a vehicle;
- a worm in lubricated engagement with the worm wheel;
- an opening for assembling the engagement between the worm wheel and the worm;
- a cover according to the aspect relating to the cover to cover the opening.

The aforementioned exemplary, preferable and alternative aspects and embodiments of the cover, along with their advantageous effects, also respectively apply to the worm wheel gear box, and vice versa.

Owing to the worm wheel gear box, steering of the wheels of the vehicle can reliably be supported for an increased service life.

According to still another aspect, an electric power steering system for a vehicle is provided, the electric power steering system comprising:
- a rack bar for displacing steered wheels of the vehicle;
- a worm wheel gear box according to the aspect relating to the worm wheel gear box with a cover according to the aspect relating to the cover; and
- an electric powering unit for powering the worm.

The aforementioned exemplary, preferable and alternative aspects and embodiments of the cover and the worm wheel gear box, along with their advantageous effects, also respectively apply to the electric power steering system, and vice versa.

The worm wheel gear box of the electric power steering system for a vehicle may particularly include the cover. The cover may in particular be sealingly attached or mounted to the opening of the cover, so as to particularly tightly close the worm wheel gear box, in order to prevent leakage of lubricant from the worm wheel gear box over an increased service life.

In exemplary embodiments, the electric powering unit may be configured to receive an input signal, initiated by a driver turning a steering wheel of the vehicle. Upon turning the steering wheel of the vehicle, and upon according receipt of the input signal by the electric power unit, the electric power unit may be configured to power the worm which, due to its engagement with the worm wheel, powers the worm wheel, wherein the worm wheel is in turn particularly configured to power the rack bar via the pinion. Without being limited thereto, the rack bar may particularly be powered in a vehicle width direction, so as to effect a steering movement of the steered wheels. In further exemplary embodiments, the input signal may be initiated by a vehicle control unit which sends a steering command as the input signal to the electric power unit, particularly without necessarily turning a steering wheel of the vehicle, for example in autonomously driving vehicles.

Meanwhile in particular the worm as well as the worm wheel are enclosed by the worm wheel gear box, the electric powering unit may be provided externally of the worm wheel gear box. The electric power unit may accordingly be sealingly connected with the worm, which is at least partially disposed in the worm wheel gear box for powering the worm wheel.

The worm wheel is particularly connected with the pinion, preferably concentrically connected with the pinion. Furthermore, in particular embodiments, the worm wheel and the pinion may be connected to the same shaft so as to rotate in unison, which advantageously enhances the transmission of the power from the worm connected to the electric power unit to the pinion.

In preferred embodiments, the engagement between the pinion and the rack bar for displacing the wheels of the vehicle is also enclosed by the worm wheel gear box, which particularly facilitates a lubricated engagement between the pinion and the rack bar. Owing to the power transmitted to the rack bar, which may particularly cause the rack bar to move in its axial direction, i.e. provide for a left and right movement in the meaning of the vehicle width direction, the steering of the wheels is advantageously facilitated. Accordingly, owing to the worm wheel gear box and its cover for sealingly closing the worm wheel gear box, an efficient electrical steering support may be provided for an increased service life.

These and other objects, features and advantages of the present invention will become more apparent upon reading of the following detailed description of preferred embodiments and accompanying drawings. **It** should be understood that even though embodiments are separately described, single features thereof may be combined to additional embodiments.
- Figure 1a: shows an overview of an electrical power steering system according to an embodiment of the present invention;
- Figure 1b: shows another overview of an electrical power steering system according to an embodiment of the present invention;
- Figure 2a: shows a cover according to an exemplary embodiment of the present invention in an oblique view;
- Figure 2b: shows a cover according to an exemplary embodiment of the present invention in a cut view;
- Figure 3a: shows a cover according to an exemplary embodiment of the present invention in a top view toward an inner surface of the cover; and
- Figure 3b: shows a cover according to an exemplary embodiment of the present invention in a bottom view toward an outer surface of the cover.

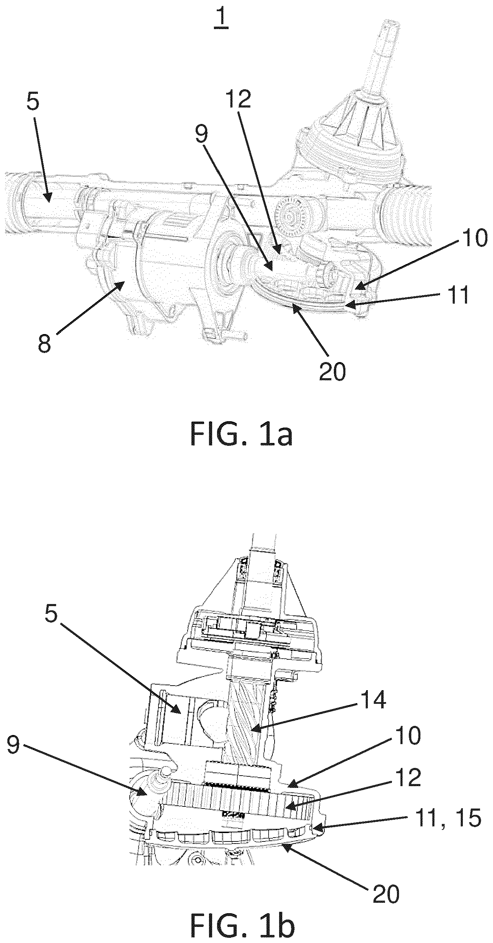

Figure 1a shows an overview of an exemplary electrical power steering system 1 according to an embodiment of the present invention. Figure 1b shows another overview of an electrical power steering system 1 according to an embodiment of the present invention, wherein the electrical power steering system 1 as shown in Fig. 1b particularly corresponds to the one as shown in Fig. 1a.

As shown in Fig. 1a, the exemplary electrical power steering system 1 includes an electric powering unit 8, which is provided for powering or supporting the movement of the rack bar 5, particularly for powering or supporting a substantially axial movement of the rack bar 5, in order to steer wheels of a vehicle (not shown).

As shown in Figs. 1a and 1b, the electric power unit 8 is connected to a worm 9 which particularly reaches into the worm wheel gear box 10, which is shown as partially cut in Fig. 1a and shown as cut in Fig. 1b. In the worm wheel gear box 10, the worm 9 is in engagement with the worm wheel 12, such that the worm 9 transmits a driving power of the electric power unit 8 to the worm wheel 12, so as to rotate the worm wheel 12.

The worm wheel 12 is connected to the pinion 14 which in turn is in engagement with the rack bar 5. Thus, the rotation of the worm wheel 12 is transmitted via the pinion 14 to the rack bar 5, such that the rack bar 5 is axially displaced upon rotation of the worm wheel 12.

As shown in Fig. 1b, the worm wheel 12 and the pinion 14 may be coaxially disposed to one another and in particular be connected to one shaft which transmits the rotation of the worm wheel 12 to the pinion 14. The axial displacement of the rack bar 5 may particularly correspond to a left-right movement direction with respect to a vehicle width direction, so as to displace the respective wheels according to the driver's steering.

Upon turning a steering wheel by a driver (not shown), or upon initiating a steering command by a vehicle control unit, wherein the turning of the steering wheel or the steering command is respectively configured to trigger an input signal to be send to the electric powering unit 8, the electric powering unit 8 may be configured to receive the input signal and, and in response to said input signal, may be configured to power the worm 9 to drive the worm wheel 12, which in turn causes the pinion 14 to rotate and to further power and displace the rack bar 5 in accordance with the direction in which the driver turns the steering wheel.

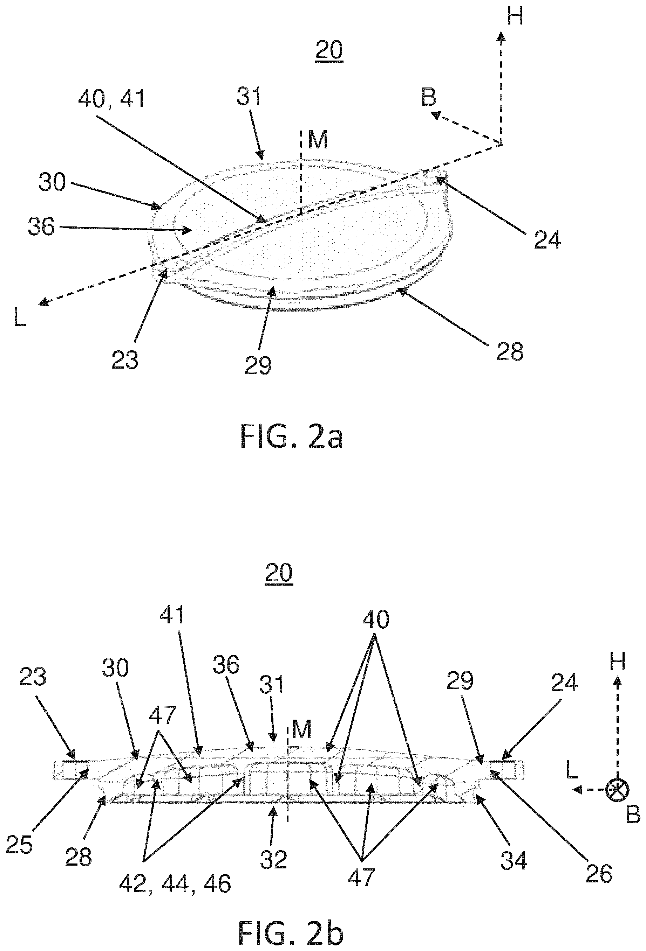

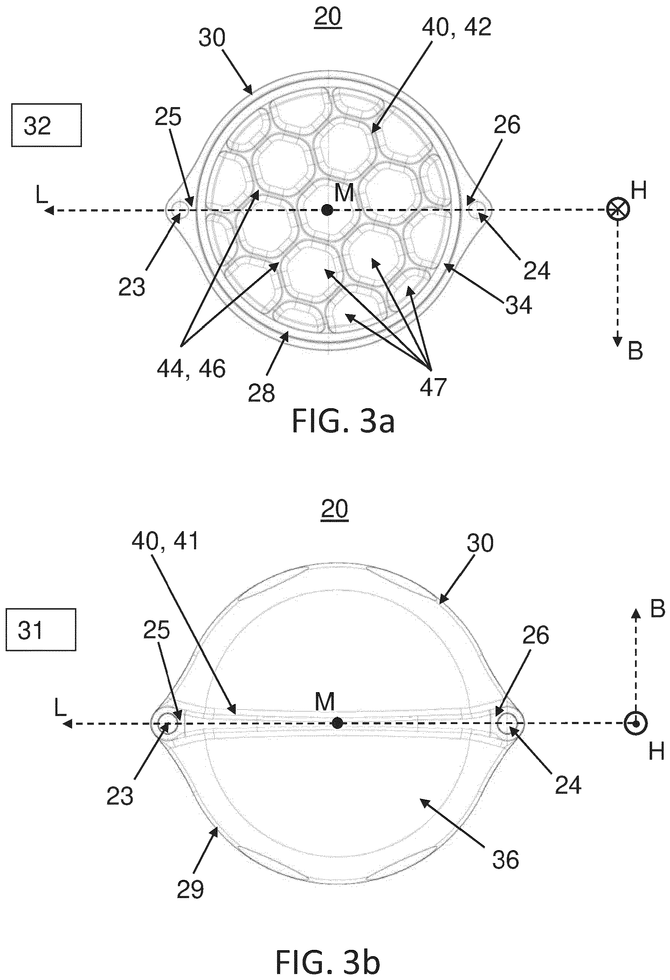

As shown in Figs. 1a und 1b, the worm wheel gear box 10 is particularly closed by the cover 20 which is attached to the opening 11 of the worm wheel gear box 10, wherein the cover 20 particularly is in sealing engagement with the outer circumference 15 of the opening 11, so as to tightly close or tightly seal the worm wheel gear box 10. For tightly closing or tightly sealing the worm wheel gear box 10 with the cover 20, a sealing member such as an O-ring may be disposed in between the outer circumference 15 of the opening 11 and tubular portion 28 of the cover 20, as particularly shown in Figs. 2a, 2b and 3a.

Figure 2a shows a cover 20 according to an exemplary embodiment of the present invention in an oblique view. The cover 20 as shown in Fig. 2a may particularly correspond to the cover 20 as shown in Figs. 1a and 1b.

Figure 2b shows a cover 20 according to an exemplary embodiment of the present invention in a cut view. The cover 20 as shown in Fig. 2b may particularly correspond to the cover 20 as shown in Figs. 1a, 1b and 2a.

Figure 3a shows a cover 20 according to an exemplary embodiment of the present invention in a top view toward an inner surface 32 of the cover 20. The cover 20 as shown in Fig. 3a may particularly correspond to the cover 20 as shown in Figs. 1a, 1b, 2a and 2b.

Figure 3b shows a cover 20 according to an exemplary embodiment of the present invention in a bottom view toward an outer surface 31 of the cover 20. The cover 20 as shown in Fig. 3a may particularly correspond to the cover 20 as shown in Figs. 1a, 1b, 2a, 2b and 3a.

As shown in Figs. 2a, 2b, 3a and 3b, the cover 20 may particularly have a substantially circular shaped cover body 30, wherein the first attachment means 23 and the second attachment means 24 respectively protrude substantially radial outwardly from the substantially circular shape of the cover body 30.

The first attachment means 23 and the second attachment means 24 are particularly disposed diametrically opposite to one another at the cover body 30. The length direction L is exemplarily drawn as a direction in which the first and second attachment means 23, 24 are diametrically opposed. The width direction B is drawn substantially perpendicular to the length direction L and lies in the same plane with the length direction L, in which the cover body 30 has his largest extension, as particularly emphasized in Fig. 2b. The height direction H points from the lower side or inner surface 32 of the cover body 30 to the upper side or outward surface 31 of the cover body 30. The middle M of the cover body 30 is exemplarily depicted in Figs. 2a, 2b, 3a and 3b and substantially corresponds to the middle of the substantially circular shaped cover body 30.

In view of Figs. 1a and 1b, it is understood that the upper side or outward surface 31 and the lower side or inner surface 32, as particularly shown in Figs. 2a, 2b, 3a and 3b, do not need to correspond to a lower or upper side with respect to an attached or mounted state in a vehicle, as exemplarily depicted in Figs. 1a and 1b. Specifically, when comparing Figs. 1a and 1b to Figs. 2a, 2b, 3a and 3b, it is to be understood that the inner surface 32 of the cover body 30 particularly relates to a side or face of the cover body 30 which faces the inside of the worm wheel gear box 10, and the outer circumference 15 of the opening 11 of the worm wheel gear box 10, when the cover 20 is in an attached or mounted state with respect to the worm wheel gear box 10. Accordingly, the outer surface 31 of the cover body 30 particularly relates to a side or face of the cover body 30 which faces away from the inside of the worm wheel gear box 10, when the cover 20 is in an attached or mounted state with respect to the worm wheel gear box 10.

As shown in Figs. 2a, 2b and 3a, the cover body 30 may particularly include a substantially tubular portion 28 which is configured to extend downward in the height direction H from a disc or dome shape top 36 of the cover body 30. The substantially tubular portion 28 is accordingly particularly configured to extend into the opening 11 of the worm wheel gear box 10, and further particularly configured to at least partially face the outer circumference 15 of the opening 11. A sealing engagement is preferably formed between the tubular portion 28 and the outer circumference 15 of the opening 11, wherein at least one sealing member (not shown) may in particular be disposed between the tubular portion 28 and the outer circumference 15 of the opening 11.

As shown in Fig. 2b, the cover body 30, particularly at its tubular portion 28, may include a sealing portion 34, which may be formed as one or more substantially circumferential recesses, which are particularly configured to face the outer circumference 15 of the opening 11. The sealing member (not shown) may particularly be at least partially disposed at or in the sealing portion 34.

As shown in Figs. 2a, 2b, 3a and 3b, the cover body 30 may particularly exclusively include the first attachment means 23 and the second attachment means 24 for attaching, preferably releasably attaching the cover 20 to the worm wheel gear box 10. The first and second attachment means 23, 24 may particularly include an attachment hole 25, 26 for releasably attaching the cover 20 to the worm wheel gear box 10, for example via bolts, screws, or clips.

As sown in Figs. 2a, 2b, 3a and 3b, the cover body 30 may include at least one reinforcement structure 40, i.e. at least an outer reinforcement structure 41 on the outer surface 31 or an inner reinforcement structure 42 on the inner surface 32, and preferably both, the outer reinforcement structure 41 and the inner reinforcement structure 42 which are disposed on opposite sides of the substantially disc or dome shaped top 36 of the cover body 30.

As shown in Figs. 2a, 2b and 3b, the outer reinforcement structure 41 is a rib which extends between the first attachment means 23 and the second attachment means 24, wherein the outer reinforcement structure 41 preferably transitions into the first attachment means 23 and the second attachment means 24 at the respective diametrically opposite positions of the cover body 30. As shown in cut view according to Fig. 2b, which is particularly cut at a plane spanned by the length direction L and the height direction H, the outer reinforcement structure 41 may particularly transition into the wall 26 directly surrounding the first attachment means 23 and at the diametrically opposite side preferably transition into the wall 26 directly surrounding the second attachment means 25.

As particularly shown in Figs. 2a and 3b, the outer reinforcement structure 41 may have an increasing width in the width direction B, preferably an increasing cross section, towards the respective first and second attachment means 23, 24.

As shown in Fig. 2b, the cover body 30 may particularly include a convex curvature toward the upper side of the cover body 30. On other words, the cover body 30 may particularly have an increased height in in the height direction H towards the middle M of the cover body 30.

Furthermore, as particularly shown in Figs. 2a, 2b, 3a and 3b, the cover body 30 may include a flange portion 29 at a distal end or upper distal end of the tubular portion 28, and radial outwardly extend beyond the tubular portion 28. The flange 29 may particularly include the first and second attachment means 23, 24, wherein the first and second attachment means 23, 24 particularly substantially extend in the height direction H in order to be accordingly attached to corresponding attachment means of the worm wheel gear box 10.

As shown in Figs. 2b and 3a, the inner reinforcement structure 42 may particularly extend across the inner surface 32 of the cover body 30, and particularly extend substantially downward in the height direction H from the disc or dome shaped top 36 of the cover body 30.

The inner reinforcement structure 42 particularly includes or is a honeycomb structure 44 with comb wall portions 46 which extend substantially downward from the top 36 of the cover body 30 in the height direction H, wherein in between the comb wall portions 46 valley portions 47 extend in substantially hexagonal shape, wherein the valley portions 47 have a reduced wall thickness, particularly in the height direction H, compared to the comb wall portions 46.

As shown in Fig. 3a, the honeycomb structure 44 may particularly extend inward of the tubular portion 28, particularly radially inward the tubular portion 28, and between radially opposite portions of the tubular portion 28. Preferably, the comb wall portions 46 of the honeycomb structure 44 may be formed so as to extend from one portion of the tubular portion 28 to a substantially diametrically opposite portion of the tubular portion 28, more preferably at several circumferentially displaced portions of the tubular portion 28, i.e. so as to substantially cover the whole inner surface 32 radially inward of the sealing portion 34 or the tubular portion 28 at which the sealing portion 34 may particularly be formed. Thus, the honeycomb structure 44 of the inner reinforcement structure 42 is advantageously configured to reinforce the tubular portion 28 from radially inward, in order to ensure a reliable sealing of the worm wheel gear box 10 via the cover 20 over an increased service life. Furthermore, since the rib of the outer reinforcement structure 41 preferably extends directly adjacent from the first attachment means 23 to the second attachment means 24, loads can advantageously be precisely guided through the outer reinforcement structure 41, particularly with a load path which does not interfere the sealing portion 34, thus further enhancing the reliable sealing of the worm wheel gear box 10 via the cover 20 over an increased service life.

As shown in Fig. 3a, the honeycomb structure 44 may at least include 7 fully formed combs at the inner surface 32 of the cover body 30, which particularly extend radially inward of the sealing portion 34, and particularly include 7 fully formed combs and 12 partially formed combs, wherein the comb wall portions 46 of the partially formed combs connect the tubular portion 28 or in other words the inner circumference of the sealing portion 34 with the comb wall portions 46 of the fully formed combs at the middle M of the inner surface 32. The wall portions 46 of the partially formed combs toward the tubular portion 28 or the inner circumference of the sealing portion 34 advantageously provide for a distributed reinforcement of the sealing engagement of the cover 20 to the opening 11 of the worm wheel gear box 10.

### List of Reference Numerals

- 1: electrical power steering system
- 5: rack bar
- 8: electric powering unit
- 9: worm
- 10: worm wheel gear box
- 11: opening
- 12: worm wheel
- 14: pinion
- 15: outer circumference of the opening
- 20: cover
- 23: first attachment means
- 24: second attachment means
- 25: wall directly surrounding the first attachment means
- 26: wall directly surrounding the second attachment means
- 28: tubular portion
- 29: flange portion
- 30: cover body
- 31: outer surface
- 32: inner surface
- 34: sealing portion
- 36: top
- 40: reinforcement structure
- 41: outer reinforcement structure
- 42: inner reinforcement structure
- 44: honeycomb structure
- 46: comb wall portions
- 47: valley portions
- B: width direction
- H M: height direction
- L: length direction middle (of the cover body)

## Claims

1. Cover (20) for a worm wheel gear box (10), the cover (20) comprising:
- a substantially disc or dome shaped cover body (30) configured to cover an opening (11) of the worm wheel gear box (10),
-- wherein the cover body (30) includes an inner surface (32) configured to face the worm wheel gear box (10) and an opposite outer surface (31);
-- wherein the cover body (30) includes a sealing portion (34) formed on the inner surface (32) and configured to sealingly engage an outer circumference (15) of the opening (11) of the worm wheel gear box (10);
-- wherein the cover body (30) includes a first attachment means (23) and a second attachment means (24) for mounting the cover body (30) to the worm wheel gear box (10), wherein the first attachment means (23) and the second attachment means (24) are provided at substantially diametrically opposed positions of the cover body (30);
-- wherein the cover body (30) includes a reinforcement structure (40) reinforcing the cover body (30),
the cover (20) being **characterized in that**
the reinforcement structure (40) of the cover body (30) includes an outer reinforcement structure (41) on the outer surface (31) and an inner reinforcement structure (42) on the inner surface (32),
wherein the outer reinforcement structure (41) extends from the first attachment means (23) to the second attachment means (24), and
wherein the outer reinforcement structure (41) is a rib extending from the first attachment means (23) to the second attachment means (24).

2. Cover (20) according to claim 1, wherein the first attachment means (23) is a first attachment hole, wherein the second attachment means (24) is a second attachment hole, and
wherein the outer reinforcement structure (41) continuously extends from a wall (25) directly surrounding the first attachment hole to a wall (26) directly surrounding the second attachment hole.

3. Cover (20) according to claim 1 or 2, wherein the outer reinforcement structure (41) has a cross section which respectively increases toward the first attachment means (23) and the second attachment means (24).

4. Cover (20) according to any one of the claims 1 to 3, wherein the inner reinforcement structure (42) extends substantially across or over the inner surface (32).

5. Cover (20) according to claim 4, wherein the inner reinforcement structure (42) includes a honeycomb structure (44).

6. Cover (20) according to claim 5, wherein the honeycomb structure (44) includes comb wall portions (46) and substantially hexagonal shaped valley portions (47) in between the comb wall portions (46).

7. Cover (20) according to claim 5 or 6, wherein the honeycomb structure (44) includes at least 7 fully formed combs around the center of the cover body (30) and a plurality of partially formed combs which respectively extend between the fully formed combs and the sealing portion (34).

8. Cover (20) according to claim 7, wherein the honeycomb structure includes between 7 to 19 fully formed combs around the center of the cover body (30).

9. Cover (20) according to any one of the claims 1 to 8, wherein the cover (20) is a molded plastic part.

10. Cover (20) according to any one of the claims 1 to 9, wherein the sealing portion (34) has an outer diameter in the range of about 60 mm to about 170 mm,
preferably in the range of about 100 mm to about 140 mm.

11. Worm wheel gear box (10) for a steering system (1), the worm wheel gear box (10) comprising:
- a worm wheel (12) connected to a pinion (14), wherein the pinion (14) is configured to engage a rack bar (5) for displacing steered wheels of a vehicle;
- a worm (9) in lubricated engagement with the worm wheel (12);
- an opening (11) for assembling the engagement between the worm wheel (12) and the worm (9);
- a cover (20) according to any one of the claims 1 to 10 to cover the opening (11).

12. Electric power steering system (1) for a vehicle, the electric power steering system (1) comprising:
- a rack bar (5) for displacing steered wheels of the vehicle;
- a worm wheel gear box (10) according to claim 11 with a cover (20) according to any one of the claims 1 to 10; and
- an electric powering unit (8) for powering the worm (9).

## Patentansprüche

1. Eine Abdeckung (20) für ein Schneckenradgetriebe (10), wobei die Abdeckung (20) Folgendes umfasst:
- einen im Wesentlichen scheiben- oder kuppelförmigen Abdeckkörper (30), der dazu konfiguriert ist, eine Öffnung (11) des Schneckenradgetriebes (10) abzudecken,
-- wobei der Abdeckkörper (30) eine Innenfläche (32) beinhaltet, die dazu konfiguriert ist, dem Schneckenradgetriebe (10) zugewandt zu sein, und eine gegenüberliegende Außenfläche (31) beinhaltet;
-- wobei der Abdeckkörper (30) einen Dichtungsabschnitt (34) beinhaltet, der an der Innenfläche (32) ausgebildet ist und dazu konfiguriert ist, mit einem Außenumfang (15) der Öffnung (11) des Schneckenradgetriebes (10) dichtend in Eingriff zu stehen;
-- wobei der Abdeckkörper (30) ein erstes Befestigungsmittel (23) und ein zweites Befestigungsmittel (24) zur Montage des Abdeckkörpers (30) am Schneckenradgetriebe (10) beinhaltet, wobei das erste Befestigungsmittel (23) und das zweite Befestigungsmittel (24) an im Wesentlichen diametral gegenüberliegenden Positionen des Abdeckkörpers (30) bereitgestellt werden;
-- wobei der Abdeckkörper (30) eine den Abdeckkörper (30) verstärkende Verstärkungsstruktur (40) beinhaltet,
wobei die Abdeckung (20) **dadurch gekennzeichnet ist, dass**
die Verstärkungsstruktur (40) des Abdeckkörpers (30) eine äußere Verstärkungsstruktur (41) an der Außenfläche (31) und eine innere Verstärkungsstruktur (42) an der Innenfläche (32) beinhaltet,
wobei sich die äußere Verstärkungsstruktur (41) vom ersten Befestigungsmittel (23) zum zweiten Befestigungsmittel (24) erstreckt, und
wobei die äußere Verstärkungsstruktur (41) eine Rippe ist, die sich vom ersten Befestigungsmittel (23) zum zweiten Befestigungsmittel (24) erstreckt.

2. Die Abdeckung (20) nach Anspruch 1, wobei das erste Befestigungsmittel (23) ein erstes Befestigungsloch ist, wobei das zweite Befestigungsmittel (24) ein zweites Befestigungsloch ist, und
wobei sich die äußere Verstärkungsstruktur (41) durchgehend von einer das erste Befestigungsloch unmittelbar umgebenden Wand (25) bis zu einer das zweite Befestigungsloch unmittelbar umgebenden Wand (26) erstreckt.

3. Die Abdeckung (20) nach Anspruch 1 oder 2, wobei die äußere Verstärkungsstruktur (41) einen Querschnitt aufweist, der sich jeweils in Richtung des ersten Befestigungsmittels (23) und des zweiten Befestigungsmittels (24) vergrößert.

4. Die Abdeckung (20) nach irgendeinem der Ansprüche von 1 bis 3, wobei sich die innere Verstärkungsstruktur (42) im Wesentlichen über die Innenfläche hinweg oder oberhalb der Innenfläche (32) erstreckt.

5. Die Abdeckung (20) nach Anspruch 4, wobei die innere Verstärkungsstruktur (42) eine Wabenstruktur (44) beinhaltet.

6. Die Abdeckung (20) nach Anspruch 5, wobei die Wabenstruktur (44) Wabenwandabschnitte (46) und zwischen den Wabenwandabschnitten (46) liegende, im Wesentlichen sechseckig geformte Talabschnitte (47) beinhaltet.

7. Die Abdeckung (20) nach Anspruch 5 oder 6, wobei die Wabenstruktur (44) mindestens 7 vollständig ausgebildete Waben um die Mitte des Abdeckungskörpers (30) herum beinhaltet und eine Vielzahl teilweise ausgebildeter Waben beinhaltet, die sich jeweils zwischen den vollständig ausgebildeten Waben und dem Dichtungsabschnitt (34) erstrecken.

8. Die Abdeckung (20) nach Anspruch 7, wobei die Wabenstruktur zwischen 7 und 19 vollständig ausgebildete Waben um die Mitte des Abdeckungskörpers (30) herum beinhaltet.

9. Die Abdeckung (20) nach irgendeinem der Ansprüche von 1 bis 8, wobei die Abdeckung (20) ein geformtes Kunststoffteil ist.

10. Die Abdeckung (20) nach irgendeinem der Ansprüche von 1 bis 9, wobei der Dichtungsabschnitt (34) einen Außendurchmesser im Bereich von etwa 60 mm bis etwa 170 mm, vorzugsweise im Bereich von etwa 100 mm bis etwa 140 mm, aufweist.

11. Ein Schneckenradgetriebe (10) für ein Lenksystem (1), wobei das Schneckenradgetriebe (10) Folgendes umfasst:
- ein Schneckenrad (12), das mit einem Ritzel (14) verbunden ist, wobei das Ritzel (14) dazu konfiguriert ist, mit einer Zahnstange (5) in Eingriff zu stehen, um gelenkte Räder eines Fahrzeugs zu verstellen;
- eine Schnecke (9), die in geschmiertem Eingriff mit dem Schneckenrad (12) steht;
- eine Öffnung (11) zum Zusammenfügen des Eingriffs (*assembling the engagement*) zwischen dem Schneckenrad (12) und der Schnecke (9);
- eine Abdeckung (20) nach irgendeinem der Ansprüche von 1 bis 10 zum Abdecken der Öffnung (11).

12. Ein elektrisches Servolenksystem (1) für ein Fahrzeug, wobei das elektrische Servolenksystem (1) Folgendes umfasst:
- eine Zahnstange (5) zum Verstellen der gelenkten Räder des Fahrzeugs;
- ein Schneckenradgetriebe (10) nach Anspruch 11 mit einer Abdeckung (20) nach irgendeinem der Ansprüche von 1 bis 10; und
- eine elektrische Antriebseinheit (8) zum Antreiben der Schnecke (9).

## Revendications

1. Un couvercle (20) pour une boîte d'engrenage à roue hélicoïdale (10), le couvercle (20) comprenant :
- un corps de couvercle (30) sensiblement en forme de disque ou de dôme, configuré pour recouvrir une ouverture (11) de la boîte d'engrenage à roue hélicoïdale (10),
-- sachant que le corps de couvercle (30) inclut une surface interne (32) configurée pour faire face à la boîte d'engrenage à roue hélicoïdale (10), et une surface externe (31) opposée ;
-- sachant que le corps de couvercle (30) inclut une partie d'étanchéité (34) formée sur la surface interne (32) et configurée pour s'engager de manière étanche avec une circonférence externe (15) de l'ouverture (11) de la boîte d'engrenage à roue hélicoïdale (10) ;
-- sachant que le corps de couvercle (30) inclut un premier moyen de fixation (23) et un deuxième moyen de fixation (24) destinés à monter le corps de couvercle (30) sur la boîte d'engrenage à roue hélicoïdale (10), le premier moyen de fixation (23) et le deuxième moyen de fixation (24) étant prévus à des positions essentiellement diamétralement opposées du corps de couvercle (30) ;
-- sachant que le corps de couvercle (30) inclut une structure de renforcement (40) renforçant le corps de couvercle (30),
le couvercle (20) étant **caractérisé en ce que**
la structure de renforcement (40) du corps de couvercle (30) inclut une structure de renforcement externe (41) sur la surface externe (31) et une structure de renforcement interne (42) sur la surface interne (32),
sachant que la structure de renforcement externe (41) s'étend du premier moyen de fixation (23) au deuxième moyen de fixation (24), et
sachant que la structure de renforcement externe (41) est une nervure s'étendant du premier moyen de fixation (23) au deuxième moyen de fixation (24).

2. Le couvercle (20) d'après la revendication 1, sachant que le premier moyen de fixation (23) est un premier trou de fixation, sachant que le deuxième moyen de fixation (24) est un deuxième trou de fixation, et
sachant que la structure de renforcement externe (41) s'étend de manière continue depuis une paroi (25) entourant directement le premier trou de fixation jusqu'à une paroi (26) entourant directement le deuxième trou de fixation.

3. Le couvercle (20) d'après la revendication 1 ou 2, sachant que la structure de renforcement externe (41) présente une section transversale qui augmente respectivement en direction du premier moyen de fixation (23) et du deuxième moyen de fixation (24).

4. Le couvercle (20) d'après l'une quelconque des revendications de 1 à 3, sachant que la structure de renforcement interne (42) s'étend essentiellement sur ou au-dessus de la surface interne (32).

5. Le couvercle (20) d'après la revendication 4, sachant que la structure de renforcement interne (42) inclut une structure en nid d'abeilles (44).

6. Le couvercle (20) d'après la revendication 5, sachant que la structure en nid d'abeilles (44) inclut des parties de paroi de cellules (46) et des parties en creux (47) de forme sensiblement hexagonale entre les parties de paroi de cellules (46).

7. Le couvercle (20) d'après la revendication 5 ou 6, sachant que la structure en nid d'abeilles (44) inclut au moins 7 cellules entièrement formées autour du centre du corps de couvercle (30), et une pluralité de cellules partiellement formées qui s'étendent respectivement entre les cellules entièrement formées et la partie d'étanchéité (34).

8. Le couvercle (20) d'après la revendication 7, sachant que la structure en nid d'abeilles inclut entre 7 et 19 cellules entièrement formées autour du centre du corps de couvercle (30).

9. Le couvercle (20) d'après l'une quelconque des revendications de 1 à 8, sachant que le couvercle (20) est une pièce en plastique moulée.

10. Le couvercle (20) d'après l'une quelconque des revendications de 1 à 9, sachant que la partie d'étanchéité (34) présente un diamètre extérieur compris dans la plage d'environ 60 mm à environ 170 mm, de préférence dans la plage d'environ 100 mm à environ 140 mm.

11. Une boîte d'engrenage à roue hélicoïdale (10) pour un système de direction (1), la boîte d'engrenage à roue hélicoïdale (10) comprenant :
- une roue hélicoïdale (12) reliée à un pignon (14), sachant que le pignon (14) est configuré pour venir en prise avec une barre de crémaillère (5) pour déplacer des roues directrices d'un véhicule ;
- une vis sans fin (9) en prise lubrifiée avec la roue hélicoïdale (12) ;
- une ouverture (11) pour l'assemblage de la mise en prise entre la roue hélicoïdale (12) et la vis sans fin (9) ;
- un couvercle (20) d'après l'une quelconque des revendications de 1 à 10, destiné à recouvrir l'ouverture (11).

12. Un système de direction assistée électrique (1) pour un véhicule, le système de direction assistée électrique (1) comprenant :
- une barre de crémaillère (5) pour déplacer des roues directrices du véhicule ;
- une boîte d'engrenage à roue hélicoïdale (10) d'après la revendication 11, avec un couvercle (20) d'après l'une quelconque des revendications de 1 à 10 ; et
- une unité d'entraînement électrique (8) pour entraîner la vis sans fin (9).
